# EUROPEAN PATENT SPECIFICATION

(11) **EP 2 456 131 B1**
(45) Date of publication and mention of the grant of the patent: **22.08.2018**
(21) Application number: 09847321.8
(22) Date of filing: 14.07.2009
(51) Int. Cl.: H04Q 11/00, H04J 14/02, H04B 10/272

(54) **OPTICAL LINE TERMINAL DEVICE AND PON SYSTEM**
OPTISCHES LEISTUNGSENDGERÄT (OLT) UND PASSIVES OPTISCHES NETZWERK (PON) SYSTEM
DISPOSITIF TERMINAL DE LIGNE OPTIQUE ET SYSTÈME PON

(43) Date of publication of application: 23.05.2012
(73) Proprietor: Mitsubishi Electric Corporation, Tokyo 100-8310 (JP)
(72) Inventor: HOTTA, Yoshifumi, Tokyo 100-8310 (JP); SUGIMURA, Koshi, Tokyo 100-8310 (JP); TANAKA, Masaki, Tokyo 100-8310 (JP)
(74) Representative: Pfenning, Meinig & Partner mbB
(86) International application number: PCT/JP2009/062756
(87) International publication number: WO 2011/007423

(56) References cited:
- WO-A1-2008/038981
- WO-A1-2009/054581
- CN-A- 101 197 627
- JP-A- 2007 274 534
- JP-A- 2008 113 193

## Description

### Field

The present invention relates to an optical line terminal in a PON (Passive Optical Network) and the PON system.

### Background

According to the spread of an FTTH (Fiber To The Home) service in these days, an FTTH service employing a PON excellent in economy is spread. In future, it is expected that a request for energy saving increases worldwide. A function for realizing power saving is requested to an OLT (Optical Line Terminal) and an ONU (Optical Network Unit), which are components of a PON system that plays a key role in the FTTH service, as well.

In the PON system in the past, in an Nth grant cycle (a cycle for determining awarding of a grant), the OLT determines, based on uplink transmission requests (R) received from a plurality of ONUs connected to the OLT, a grant (G: transmission permission) that should be awarded to an N+1th grant cycle. G and R are determined at granularity of 16 ns. The ONUs transmit, according to the grant awarded from the OLT, in a burst-like manner, an MPCP (Multi-Point Control Protocol) frame for an EPON (Ethernet (registered trademark) PON) protocol, an OAM (Operation Administration and Maintenance) frame for maintenance, and a user frame used for communication between a user terminal and a server.

The ONUs can manage the EPON protocol frame, the OAM frame, and the user frame in different queues, respectively, and transmit R with request amounts for the respective queues multiplexed. The OLT determines G based on transmission request amounts included in R from the ONUs according to various algorithms. In general, the OLT accumulates the transmission request amounts as an allocation amount (an allocation amount of transmission time) in order from a queue having highest priority, determines transmission start times and lengths of transmission for the ONUs such that the accumulated allocation amount does not exceed the length of a grant cycle, and notifies the ONUs of a determination result. The grant cycle is divided into a plurality of sub-cycles.

Such an algorithm for dynamic band allocation to communication in an uplink direction in uplink time division multiplexing of the PON determines communication efficiency in the uplink direction. Therefore, this algorithm is requested to be an algorithm for performing allocation control to maximize the communication efficiency and is an important function for determining performance of the system. For example, an example of such an algorithm is disclosed in Patent Literature 1.

### Citation List

### Patent Literature

Patent Literature 1: Japanese Patent Application Laid-open No. 2009-049883

WO 2009/038981 A1 provides an automatic optical power control method for an optical line terminal (OLT) of a passive optical network (PON). The automatic optical power control method includes at the OLT, measuring an allowable range of the optical power allowing a normal network operation on the PON, at the OLT, setting an optimum optical signal level within the measured allowable range of the optical power, and at the OLT, adjusting a power level of a transmitter to the set optimum optical signal level. Accordingly, an appropriate power level can be selected depending on an optical distribution network (ODN) structure to drive the transmitter. Also, when the entire optical network units are deactivated, a laser of the transmitter is turned off to thereby minimize unnecessary power consumption at the OLT.

WO 2005/054581 A1 provides a method of reducing power consumption of an optical access network (OAN) as much as possible by configuring an optical line terminal (OLT) and optical network terminals (ONTs) in the OAN to the method, upon the application of power, an ONT determines whether the requirements for switching from activation mode to power-saving mode are satisfied. If the requirements are satisfied, the ONT transmits a sleep signal to an OLT, which is a message notifying that the ONT will soon switch to power-saving mode. Thereafter, the ONT switches to power-saving mode and cuts off power for all functions except for power for monitoring and controlling external inputs. Te ONT then determines whether the requirements for switching from power-saving mode to activation mode are satisfied. If the requirements are satisfied, the ONT transmits a wake-up signal to the OLT and switches to the activation mode for normal operation.

### Summary

### Technical Problem

However, in the PON system in the past, a function for realizing power saving for the OLT apparatus is not installed. When a total of the transmission request amounts from the ONUs is small, unallocated sections (free slots) in the grant cycle increase. In the free slots, power consumption can be reduced because a frame is not received. However, in Patent Literature 1, although an algorithm concerning maximization of allocation efficiency of uplink time division multiplexing in dynamic band allocation control is disclosed, there is no mention about management of information concerning the free slots and power control for the OLT apparatus in the free slots. Therefore, there is a problem in that power saving for the OLT apparatus cannot be realized.

The present invention has been devised in view of the above and it is an object of the present invention to obtain an optical line terminal and a PON system that can realize power saving.

### Solution to Problem

These problems are solved by the optical line terminal according to claim 1 and the PON system according to claim 19 as well as by their dependent claims.

In order to solve the aforementioned problems and attain the aforementioned object, an optical line terminal that manages an optical network unit and receives, from the optical network unit, a transmission request for notifying a data amount transmitted by the optical network unit according to one aspect of the present invention is constructed in such a manner as to include: an upper-layer processing unit that applies predetermined upper layer processing to data received from the optical network unit; and a power-saving-shift determining unit that determines, based on the transmission request, whether a free period, which is a period in which a band is not allocated to data transmission from an optical network unit, is equal to or larger than a predetermined band threshold, and instructs, when it is determined that the free period equal to or larger than the predetermined band threshold is present, the upper-layer processing unit to shift to a power saving state, wherein the upper-layer processing unit shifts to the power saving state or returns from the power saving state based on the instruction of the power-saving-shift determining unit.

### Advantageous Effects of Invention

The optical line terminal and the PON system according to the present invention have an effect that the optical line terminal and the PON system can realize power saving.

### Brief Description of Drawings

[FIG. 1] FIG. 1 is a diagram of a functional configuration example of an OLT according to a first embodiment.
[FIG. 2] FIG. 2 is a diagram of an example of an LPI control method according to the first embodiment.
[FIG. 3] FIG. 3 is a diagram of a functional configuration example of an OLT according to a second embodiment.
[FIG. 4] FIG. 4 is a diagram for explaining operations performed when data is accumulated in a buffer.
[FIG. 5] FIG. 5 is a diagram of a functional configuration example of an OLT according to a third embodiment.
[FIG. 6] FIG. 6 is a diagram for explaining a method of controlling a power supply unit according to the third embodiment.
[FIG. 7] FIG. 7 is a diagram of a configuration example of a PON system according to a fourth embodiment.
[FIG. 8] FIG. 8 is a sequence chart for explaining an example of operations in the fourth embodiment performed in association with a power save protocol.

### Description of Embodiments

Embodiments of an optical line terminal and a power save method according to the present invention are explained based on the drawings. The present invention is not limited by the embodiments.

### First Embodiment.

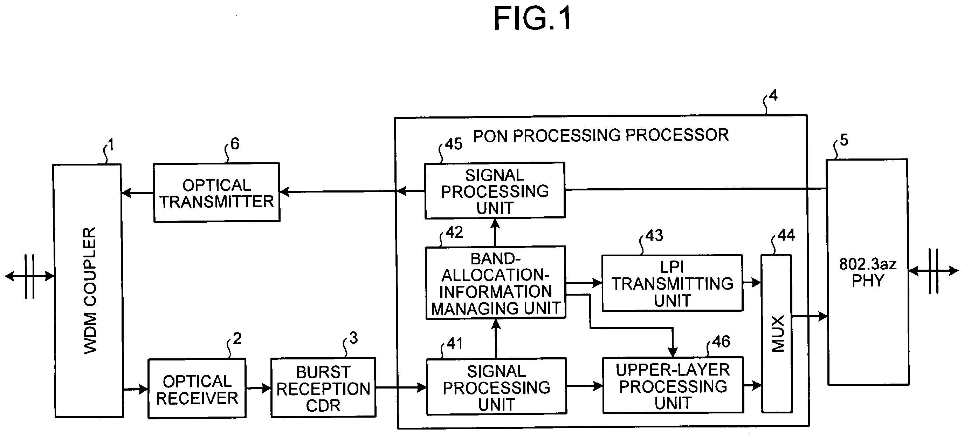

FIG. 1 is a diagram of a functional configuration example of a first embodiment of an OLT (Optical Line Terminal) according to the present invention. As shown in FIG. 1, the OLT according to this embodiment includes a WDM (Wavelength Division Multiplexing) coupler 1, an optical receiver 2, a burst reception CDR (Clock Data Recovery) 3, a PON processing processor 4, a 802.3az PHY (Physical Layer) 5, and an optical transmitter 6. The OLT according to this embodiment is connected to ONUs (Optical Subscriber Accommodation Units) and configures a PON system in conjunction with the ONUs.

The WDM coupler 1 applies demultiplexing to a light signal having light source wavelength transmitted from the OLT to the ONUs through a PON interface and light signals having light source wavelength received by the OLT from the ONUs through the PON interface. The optical receiver 2 receives burst light signals transmitted from the ONUs and converts the received light signals into electric signals. The burst reception CDR 3 generates a clock and data based on the electric signals converted by the optical receiver 2 and inputs the reproduced clock and data to the PON processing processor 4.

As uplink (a direction from the ONUs to the OLT) main signal processing, the PON processing processor 4 extracts, based on the input data, a frame necessary for PON control, converts user data from a frame format of the PON into an Ethernet (registered trademark) frame format, and transfers the user data to an upper-level device interface side (the 802.3az PHY 5). The 802.3az PHY 5 has a function of transmitting the frame output from the PON processing processor 4 to an upper-level device interface (an interface with an apparatus that performs processing of an upper layer (equal to or higher than a MAC layer)) and controlling LPI (Low Power Idle) standardized by IEEE802.3az. In the LPI standardized by IEEE802.3az, for example, when communication is not performed, a processing unit of a PHY layer is shifted to a power saving state (an LPI state) to reduce power consumption of the processing unit of the PHY layer. The processing unit of the PHY layer is returned from the LPI state during communication start or the like. An apparatus connected by the upper-level device interface is not shown in FIG. 1.

On the other hand, a signal transmitted from the upper-level device interface side is input to the PON processing processor 4 through the 802.3az PHY 5. As downlink (a direction from the OLT to the ONUs) main signal processing, the PON processing processor 4 multiplexes a PON control frame or the like generated by the PON processing processor 4 and a signal input from the upper-level device interface side, converts the PON control frame into a PON frame, and then outputs the PON frame to the optical transmitter 6. The optical transmitter 6 converts an electric signal input from the PON processing processor 4 into a light signal and transmits the light signal to the PON interface through the WDM coupler 1.

The PON processing processor 4 includes a signal processing unit 41, a band-allocation-information managing unit 42, an LPI transmitting unit 43, an MUX (multiplexer) 44, a signal processing unit 45, and an upper-layer processing unit 46. The signal processing unit 41 carries out main signal processing for an uplink signal. The signal processing unit 45 carries out main signal processing for a downlink signal. The band-allocation-information managing unit 42 has a dynamic band allocation function in the PON system in the past, manages free slot information, which is information concerning free slots, and has a transmission and reception function for a frame necessary for the PON control. The upper-layer processing unit 46 applies various kinds of signal processing in a layer higher than the MAC layer to the uplink signal processed by the signal processing unit 41. Further, the band-allocation-information managing unit 42 instructs, based on managed free slot information, the LPI transmitting unit 43 to emit an LPI transmission control signal for controlling an LPI transmission function of the 802.3az PHY 5 to shift the upper-layer processing unit 46 to an LPI state and instructs the upper-layer processing unit 46 to change to a low power consumption mode. The MUX 44 multiplexes the uplink direction signal and the LPI transmission control signal and outputs a signal after the multiplexing to the 802.3az PHY 5. The 802.3az PHY 5 causes the upper-level device interface, based on the LPI transmission control signal, to shift to the LPI state.

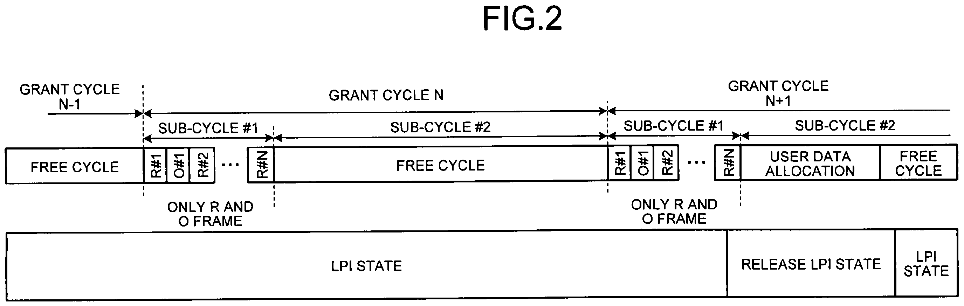

FIG. 2 is a diagram of an example of a power saving control method according to this embodiment. Operations in this embodiment are explained with reference to FIG. 2. When there is no communication by users (from the ONUs) in uplink communication, in a grant cycle N, which is an Nth grant cycle, a frame transmitted in the uplink direction is only a frame terminating in a PON section of a MPCP frame, an OAM frame, or the like. Most of the grant cycle is not assigned to the ONUs. In this embodiment, the band-allocation-information managing unit 42 of the OLT awards a grant for the ONUs in each grant cycle, which is a predetermined period. The band-allocation-information managing unit 42 divides the grant cycle into two sub-cycles and manages the sub-cycles, allocates an uplink transmission request (R) and a frame terminating in the PON section such as an OAM frame (O) to a sub-cycle #1, and allocates data for the ONUs (the users) to a sub-cycle #2. In FIG. 2, it is indicated in the bottom part whether the PON processing processor 4 is in the LPI state or a release state of the LPI (LPI state release). However, as explained above, in the LPI state the upper-layer processing unit 46 is also in the low power consumption mode, and also releases the low power consumption mode in a state in which the LPI state is released.

For example, in FIG. 2, an example is shown in which, concerning the grant cycle N, because there is no band request for a user frame in the preceding grant cycle, the uplink transmission request (R) and the OAM frame (O) terminating in the PON section are allocated to sub-cycles #1 but all sub-cycles #2 are free cycles (free slots). In such a case, in the grant cycle N, there is no frame that should be transmitted to the upper-level device interface side.

The band-allocation-information managing unit 42 of the OLT has determined, based on the content (there is no band request for a user frame) of a transmission request or the like received in the preceding period, that a grant is not awarded to the ONUs (a band for user data is not allocated). In this way, the band-allocation-information managing unit 42 can determine in a process of band allocation processing that there is no allocation to the user data (there is a free slot) in the sub-cycle #2 of the grant cycle N. When the band-allocation-information managing unit 42 determines that a grant is not awarded to the ONUs in the grant cycle N, the band-allocation-information managing unit 42 sets the upper-layer processing unit 46 in a low power saving mode with a method such as clock gate for stopping supply of a clock or power gate for interrupting electric power. The band-allocation-information managing unit 42 instructs the LPI transmitting unit 43 to transmit an LPI control signal for shifting to the LPI state to the 802.3az PHY 5. The LPI transmitting unit 43 transmits, based on the instruction, the LPI control signal to the 802.3az PHY 5. The 802.3az PHY 5 causes the upper-level device interface, based on the LPI control signal, to shift to the LPI state.

The band-allocation-information managing unit 42 of the OLT determines, based on the uplink transmission request (R) or the like received in the grant cycle N, whether transmission data from the ONUs is present in a grant cycle N+1. When there is transmission data from the ONUs, i.e., there is a frame that should be transmitted to the upper-level device interface, the band-allocation-information managing unit 42 restores the upper-layer processing unit 46 from the low power consumption mode and instructs the LPI transmitting unit 43 to release the LPI state. The LPI transmitting unit 43 outputs an LPI control signal based on the instruction and the 802.3az PHY 5 releases the upper-level device interface from the LPI state based on the LPI control signal.

When there is no data to be transferred to the upper-level device interface in the grant cycle N+1, the band-allocation-information managing unit 42 of the OLT does not restore the upper-layer processing unit 46 from the low power consumption mode and does not instruct the LPI transmitting unit 43 to release the LPI state or instructs a shift to the LPI state again and maintains a Low Power state.

The band allocation processing performed by the band-allocation-information managing unit 42 of the OLT is controlled by a local timer having granularity of 16 ns of the PON processing processor 4 of the OLT. Therefore, arrival time of the data transmitted from the ONUs can be generally controlled at accuracy of the local timer.

A method of dividing sub-cycles and a method of allocating sub-cycles are not limited to the above. Any method can be adopted. However, when an allocation section for a frame terminated in the PON section and an allocation section for user data are divided and the frame terminated in the PON section is arranged at the beginning in the grant cycle as explained above, determination of the low power consumption mode and the LPI state for the next grant cycle can be quickly carried out.

In this embodiment, when all the sub-cycles #2 are free slots, the upper-level device interface is shifted to the LPI state. However, this is an example. When free slots are continuously present for a predetermined period or more, the band-allocation-information managing unit 42 only has to instruct a shift to the low power consumption mode and the LPI state for the period of the free slots.

In this embodiment, the LPI is used for power saving. However, the present invention is not limited to this. A method of reducing electric power on the upper-level device interface side (an MAC layer and a physical layer) can be any method. When a method other than the LPI is used, the band-allocation-information managing unit 42 only has to instruct a change to a power saving state when it is determined that there is no allocation of user data and instruct a return from the power saving state when it is determined that there is allocation of user data. In this embodiment, both the shift to the LPI state and the shift to the low power consumption mode of the upper-layer processing unit 46 are carried out. However, only the shift to the low power consumption mode of the upper-layer processing unit 46 can be carried out.

In this embodiment, the band-allocation-information managing unit 42 determines, in the process of band allocation processing, whether a shift to the power saving state (the LPI state or the low power consumption mode of the upper-layer processing unit 46) is made. In other words, the band-allocation-information managing unit 42 has a function of power saving shift determining means for determining shift to the power saving state. However, the present invention is not limited to this. The power saving shift determining means can be provided separately from the band-allocation-information managing unit 42. In this case, the power saving shift determining means calculates, based on a transmission request, an amount of free slots, determines whether a shift to the power saving state is made in the same manner as the band-allocation-information managing unit 42, and instructs the LPI transmitting unit 43 to transmit a control signal.

As explained above, in this embodiment, the band-allocation-information managing unit 42 determines, in the process of band allocation, whether there is allocation of user data in the next grant cycle. When there is no allocation of user data, the band-allocation-information managing unit 42 instructs a shift to the power saving state and sets the upper-layer processing unit 46 in the low power saving mode. The LPI transmitting unit 43 outputs, based on the instruction, a signal for shifting to the LPI state. Therefore, power saving can be realized based on free slot information. Specifically, in a free slot in which data is not transmitted to the upper-level device interface side, the upper-level device interface side can be shifted to the power saving state. For example, when there is no user data transmission from the ONUs over a plurality of grant cycles, it is possible to maintain the power saving state for a long time and expect low power consumption.

### Second Embodiment.

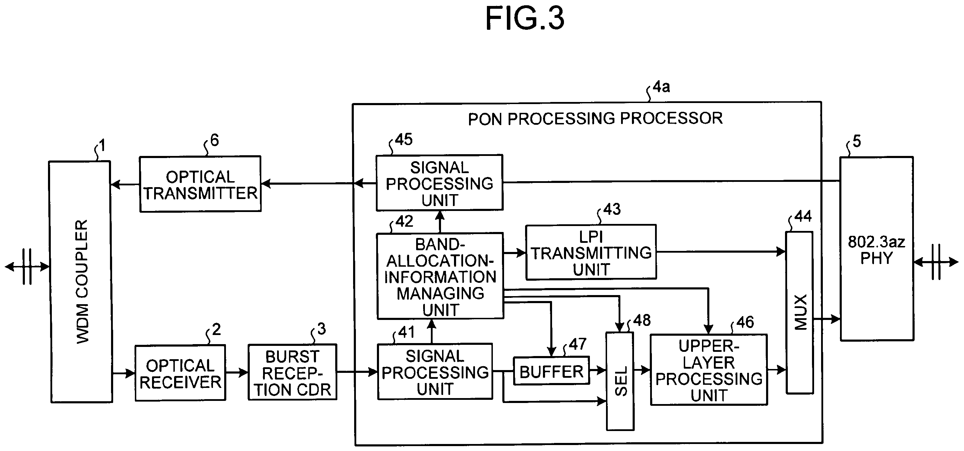

FIG. 3 is a diagram of a functional configuration example of a second embodiment of the OLT according to the present invention. The OLT according to this embodiment is the same as the OLT according to the first embodiment except that the PON processing processor 4 of the OLT according to the first embodiment is replaced by a PON processing processor 4a. The PON processing processor 4a is the same as the PON processing processor 4 according to the first embodiment except that a buffer 47 and a selector (SEL) 48 are added to the PON processing processor 4 according to the first embodiment. Components having functions same as those in the first embodiment are denoted by reference numerals and signs same as those in the first embodiment and explanation of the components is omitted.

In the first embodiment, the method in which the band-allocation-information managing unit 42 performs power saving control based on information concerning free slots obtained in the process of band allocation processing is explained. In the second embodiment, to secure a power saving state for a longer time, an OLT includes a buffer 47 for accumulating uplink user data transmitted from ONUs.

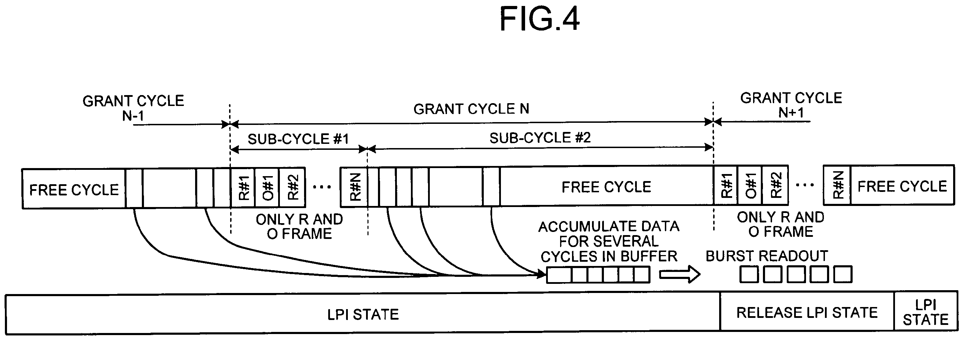

For example, when uplink data is intermittently transmitted over a plurality of grant cycles, if the OLT once accumulates uplink user data and transmits the data after the accumulation to a upper-level device interface side in a burst-like manner, the power saving state can be secured for a long time. Therefore, in this embodiment, a user frame output from the signal processing unit 41 is accumulated in the buffer 47. FIG. 4 is a diagram for explaining operations performed when data is accumulated in the buffer 47. As shown in FIG. 4, in this embodiment, data for several cycles is accumulated in the buffer 47 until a predetermined buffer dwell time elapses or a buffer accumulation amount exceeds a predetermined threshold. The accumulated data is collectively read out and transmitted to the upper-level device interface.

The buffer 47 carries out, based on an instruction from the band-allocation-information managing unit 42, an operation for accumulating or not accumulating a user frame output from the signal processing unit 41. The selector 48 selects, based on the band-allocation-information managing unit 42, one of data accumulated in the buffer 47 and data output from the signal processing unit 41 and outputs the data to the MUX 44. The arrangement of the buffer is not limited to this. The buffer can be mounted in an optimum position according to necessity.

The band-allocation-information managing unit 42 determines, based on a transmission request from an ONU or the like, whether data is intermittently transmitted. When the data is intermittently transmitted, the band-allocation-information managing unit 42 instructs the buffer 47 to accumulate the data in a range in which a delay of the data is allowed. When a buffer dwell time of a frame or a buffer accumulation amount exceeds a threshold set in advance, the band-allocation-information managing unit 42 instructs the buffer 47 to stop the accumulation of the data. The band-allocation-information managing unit 42 instructs the selector 48 to output the data accumulated in the buffer 47 to the MUX 44. When the output of the data accumulated in the buffer 47 ends, the selector 48 selects and outputs data output from the signal processing unit 41. Operations in this embodiment other than those explained above are the same as those in the first embodiment.

As the determination concerning whether data is intermittently transmitted, for example, there is a method of determining, when a data amount transmitted in one grant cycle is smaller than a predetermined threshold, that data is transmitted intermittently. This threshold is set to, for example, a value equal to or smaller than a half of data that can be transmitted in one grant cycle.

In this way, the band-allocation-information managing unit 42 instructs accumulation of data in the buffer 47 and selection of an output of the selector 48. Therefore, it is also possible to perform control for performing buffering when data is intermittently received, when uplink transmission requests from the ONUs increase, releasing an LPI state on the upper-level device interface side before the next uplink user data arrives, stopping the buffering after transmitting all buffered frames, and switching the transmission to continuous transmission (transmission without buffering).

As explained above, in this embodiment, after the operations explained in the first embodiment are carried out, when data is further intermittently transmitted from the ONUs, the data is accumulated in the buffer 47 and, after a predetermined buffer dwell time elapses or when a buffer accumulation amount exceeds a predetermined threshold, the data accumulated in the buffer 47 is read out and transmitted to the upper-level device interface. Therefore, in addition to the effects of the first embodiment, it is possible to secure, for a long time, a section in which the upper-level device interface is shifted to the power saving state when uplink user data is intermittently transmitted and expect efficient power saving.

### Third Embodiment.

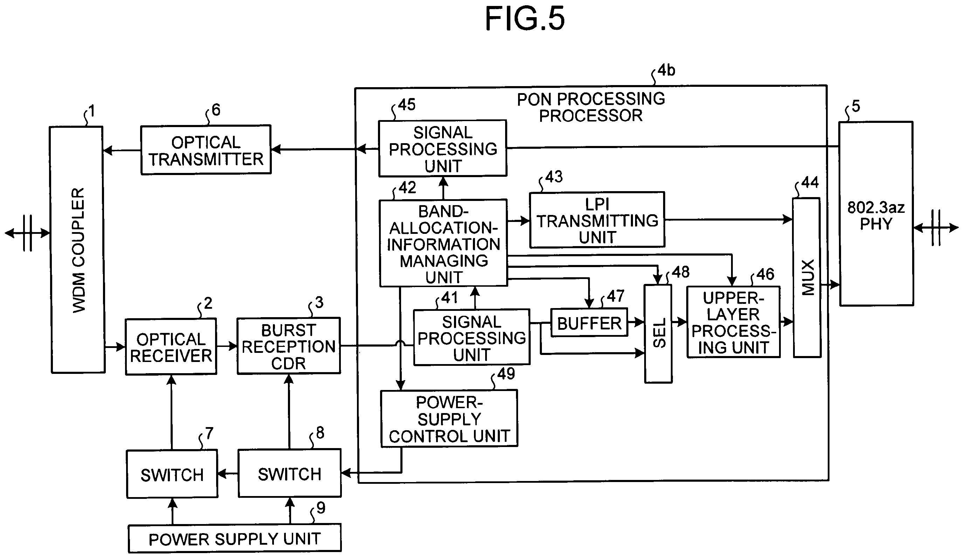

FIG. 5 is a diagram of a functional configuration example of a third embodiment of the OLT according to the present invention. The OLT according to this embodiment is the same as the OLT according to the first embodiment except that the PON processing processor 4 of the OLT according to the first embodiment is replaced by a PON processing processor 4b and switches 7 and 8 and a power supply unit 9 are added. The PON processing processor 4b is the same as the PON processing processor 4a according to the second embodiment except that a power-supply control unit 49 is added to the PON processing processor 4a according to the second embodiment. Components having functions same as those in the first or second embodiment are denoted by reference numerals and signs same as those in the first or second embodiment and explanation of the components is omitted.

In the first and second embodiments, the band allocation management and the LPI transmission function of IEEE802.3az are associated. However, power consumption of the OLT is further saved by dynamically turning on and off a power supply for the optical receiver 2 and the burst reception CDR 3 for receiving a signal in an uplink direction according to a reception state of uplink data.

The power supply unit 9 supplies power to the optical receiver 2 and the burst reception CDR 3. The switches 7 and 8 change to an ON or OFF state based on an instruction of the power-supply control unit 49 to thereby switch two states of supply and stop of supply of power to the optical receiver 2 and the burst reception CDR 3.

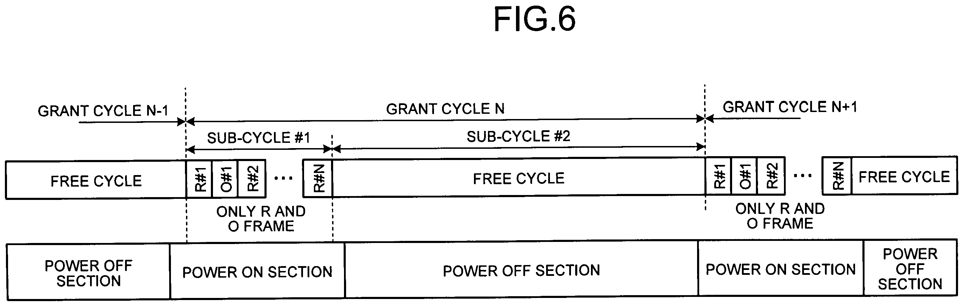

As explained in the first embodiment, the band-allocation-information managing unit 42 manages reception time of an MPCP control frame, an OAM control frame, and a user frame. FIG. 6 is a diagram for explaining a method of controlling the power supply unit 9 according to this embodiment. In an example shown in FIG. 6, in the grant cycle N, it is necessary to receive reception data only in a section of the sub-cycle #1 in which a control frame (an MPCP control frame, an OAM control frame, etc.) is received. Concerning the sub-cycle #2, it is unnecessary to receive data because a grant is not awarded. In such a case, control is performed to supply power to the optical receiver 2 and the burst reception CDR 3 in the section of the sub-cycle #1 in which it is necessary to receive data and not to supply power to the optical receiver 2 and the burst reception CDR 3 in the other section (the sub-cycle #2). Therefore, an effect of power saving can be expected. A period in which the power supply is turned on can be set longer, taking into account a startup time and a processing time, by a predetermined period before and after the section in which data is received.

In this embodiment, the band-allocation-information managing unit 42 notifies the power-supply control unit 49 of free slot information. The power-supply control unit 49 instructs the switches 7 and 8 to stop supply of power in a section of a free slot. When the section of the free slot ends, the power-supply control unit 49 instructs the switches 7 and 8 to start supply of power. The switches 7 and 8 stop, based on the instruction, supply of power to the optical receiving unit 2 and the burst reception CDR 3 or start supply of power to the optical receiving unit 2 and the burst reception CDR 3. Operations in this embodiment other than those explained above are the same as those in the second embodiment.

In this embodiment, the power supply to the optical receiver 2 and the burst reception CDR 3 is controlled. However, power supply to a user-data-processing function unit in the signal processing unit 41 can be controlled in the same manner.

In this embodiment, the power supply of the power supply unit 9 is controlled. However, instead of the control of the power supply, concerning components that perform processing of an uplink signal, supply and stop of supply of a clock input for control of the uplink signal can be controlled in the same manner as the supply and the stop of supply of power, whereby operation and non-operation of the components are controlled to realize power saving.

In this embodiment, the power-supply control unit 49 is added to the PON processing processor 4a according to the second embodiment. However, the power-supply control unit 49 can be added to the PON processing processor 4 according to the first embodiment to perform the operations explained in this embodiment.

As explained above, in this embodiment, the band-allocation-information managing unit 42 notifies the power-supply control unit 49 of free slot information, and the power-supply control unit 49 performs control to stop supply of power in a section of a free slot. Therefore, compared with the second embodiment, it is possible to realize further power saving.

### Fourth Embodiment.

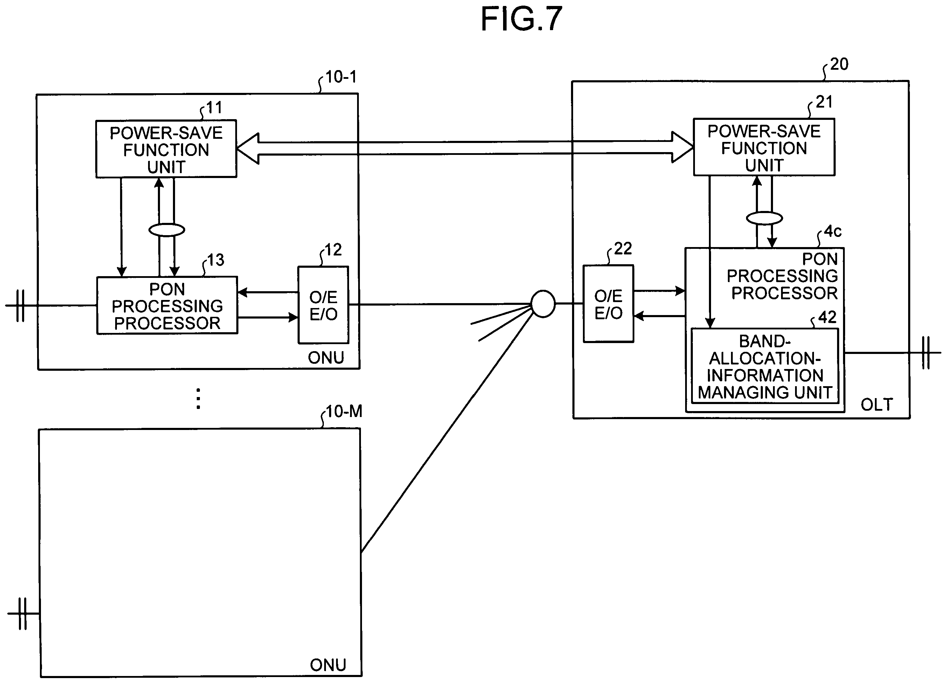

FIG. 7 is a diagram of a configuration example of a fourth embodiment of the PON system according to the present invention. The PON system according to this embodiment includes an OLT 20 and ONUs 10-1 to 10-M (M is an integer equal to or larger than 2). The OLT 20 includes a power-save function unit 21, an electrical/optical converting unit (O/E (optical-to-electrical) E/O (electrical-to-optical)) 22, and a PON processing processor 4c in the OLT according to the third embodiment. The O/E E/O 22 is equivalent to the WDM coupler 1, the optical receiver 2, the burst reception CDR 3, and the optical transmitter 6 according to the first embodiment. Only the band-allocation-information managing unit 42 is shown as a component of the PON processing processor 4c. However, besides the band-allocation-information managing unit 42, the PON processing processor 4c includes signal processing units 41 and 45 same as the signal processing units in the first embodiment. Components having functions same as those in the first to third embodiments are denoted by reference numerals and signs same as those in the first to third embodiments and explanation of the components is omitted.

Like the band-allocation-information managing unit 42 of the first embodiment, the band-allocation-information managing unit 42 has a function of carrying out band allocation processing and a function of determining a shift to a power saving state in a period of free slots when free bands (slots) equal to or larger than a predetermined set value are present based on allocated information (band allocation information).

The ONU 10-1 includes a power-save function unit 11, an electrical/optical converting unit (O/E E/O) 12, and a PON processing processor 13. The electrical/optical converting unit 12 converts a light signal received from the OLT 20 into an electric signal and converts an electric signal to be transmitted to the OLT 20 into a light signal. The PON processing processor 13 carries out predetermined processing for data to be transmitted to the OLT 20 and data received from the OLT 20. The ONUs 10-2 to 10-M have a configuration same as the configuration of the ONU 10-1.

In this embodiment, the OLT 20 and the ONUs 10-1 to 10-M support a power save protocol for realizing power saving and associate band allocation control and termination processing for the power save protocol to realize power saving. The power-save function unit 21 of the OLT 20 and the power-save function units 11 of the ONUs 10-1 to 10-M perform the termination processing for the power save protocol.

The power save protocol is a protocol for controlling shift to and return from the power saving state of the own apparatus and notifying other apparatus of a state of the own apparatus and the like according to a procedure set in advance. The power save protocol performs processing for, for example, when it is determined that there is no uplink user frame that the ONU should transmit, notifying the OLT that, because the ONU shifts to a low power consumption mode and completely stops output in an uplink direction or stops for a fixed time determined in advance, the ONU does not respond to both or any one of an OAM frame and an MPCP frame transmitted by the OLT. The power save protocol used in this embodiment can be any protocol as long as the ONU has a function of notifying the OLT that the ONU is in the power saving state. Therefore, explanation concerning the power save protocol is omitted.

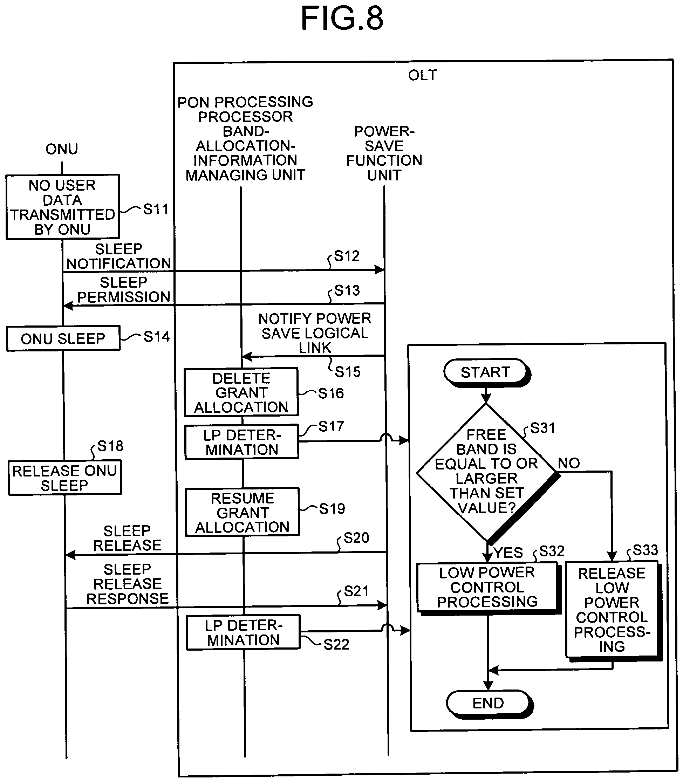

FIG. 8 is a sequence chart for explaining an example of operations in this embodiment performed in association with the power save protocol. In this sequence chart, a sequence between the OLT and one ONU (in the explanation, the ONU 10-1) is shown for convenience of explanation. However, actually, the OLT carries out this sequence between the OLT and the ONUs 10-1 to 10-M connected to the OLT.

First, when the power-save function unit 11 of the ONU 10-1 determines that there is no user data to be transmitted (step S11), the power-save function unit 11 gives SLEEP notification (notification that the ONU shifts to the power saving mode) to the OLT 20 according to the power save protocol (step S12). When the power-save function unit 21 of the OLT 20 receives the SLEEP notification, the power-save function unit 21 returns a SLEEP permission for permitting the ONU 10-1 to shift to the power saving mode (step S13). The ONU 10-1 that receives the SLEEP permission shifts to a SLEEP state (step S14) .

When the power save procedure explained above (the SLEEP notification/the SLEEP permission) is established between the ONU 10-1 and the OLT 20, the power-save function unit 21 of the OLT 20 notifies the band-allocation-information managing unit 42 that a logical link between the OLT 20 and the ONU 10-1 has changed to a power save state (step S15). When there is a grant allocated to the ONU 10-1, the band-allocation-information managing unit 42 deletes the grant (step S16). When a plurality of ONUs connected to the OLT 20 shift to this state, free cycles increase.

As in the first embodiment, the band-allocation-information managing unit 42 carries out, in a process of band allocation processing, LP determination for determining, based on free slot information, whether the OLT 20 shifts to an LP (Low Power) state (step S17).

The ONU 10-1 restores from the SLEEP state when transmission data is generated (step S18). For example, after the power-save function unit 21 returns the SLEEP permission to the ONU 10-1, the OLT 20 periodically inquires the ONU 10-1 whether SLEEP is released. The OLT 20 recognizes, according to the inquiry, that SLEEP of the ONU 10-1 is released. The band-allocation-information managing unit 42 of the OLT 20 resumes allocation of a grant to the ONU 10-1 (step S19). The power-save function unit 21 of the OLT 20 transmits SLEEP release for instructing release of the SLEEP state to the ONU 10-1 (step S20). When the power-save function unit 11 of the ONU 10-1 receives the SLEEP release, the power-save function unit 11 returns a SLEEP release response (step S21). The band-allocation-information managing unit 42 carries out LP determination based on new band allocation information (step S22).

As processing of the LP determination at steps S17 and S22, first, the band-allocation-information managing unit 42 determines whether free bands equal to or larger than a predetermined set value are present (step S31). When free slots equal to or larger than a predetermined threshold continue (Yes at step S31), the band-allocation-information managing unit 42 instructs the power-save function unit 21 to shift to a Low Power state. The power-save function unit 21 carries out Low Power control according to the power save protocol (step S32) and shifts to a power saving mode. When free slots equal to or larger than the predetermined threshold do not continue (No at step S31), the band-allocation-information managing unit 42 instructs the power-save function unit 21 to release the Low Power state. The power-save function unit 21 releases the Low Power state according to the power save protocol (step S33).

The set value used for the determination at step S31 does not need to be a single set value and can be a plurality of set values. In this case, the OLT 20 can be configured to be capable of carrying out the operations in the first and third embodiments. The OLT 20 can select and carry out any one of the operations in the first or third embodiments according to an amount of free bands. The OLT 20 can include the buffer 47 and the selector 48, can be configured to be capable of carrying out the operations in the second embodiment, and can carry out the operations in the second embodiment in addition to the operations in this embodiment.

As explained above, in this embodiment, when the ONUs 10-1 to 10-M support the power save protocol, the OLT 20 deletes, based on the SLEEP notification notified from the ONUs 10-1 to 10-M, a grant to the ONU that has transmitted the SLEEP notification. When the grant is allocated again, the OLT 20 notifies the ONU, which is in the SLEEP state, of SLEEP release. Therefore, effects same as those in the first embodiment can be obtained. Further, the OLT 20 can carry out power saving control in association with the power saving state of the ONUs 10-1 to 10-M according to this embodiment.

### Industrial Applicability

As explained above, the optical line terminal according to the present invention is useful for a PON system and, in particular, suitable for a PON system that is requested to perform power saving.

### Reference Signs List

- 1: WDM COUPLER
- 2: OPTICAL RECEIVER
- 3: BURST RECEPTION CDR
- 4, 4a, 4b, 4c, 13: PON PROCESSING PROCESSORS
- 5 802.3az: PHY
- 6: OPTICAL TRANSMITTER
- 7, 8: SWITCHES
- 9: POWER SUPPLY UNIT
- 10-1 to 10-M: ONUs
- 11, 21: POWER-SAVE FUNCTION UNITS
- 12, 22: O/E E/Os
- 20: OLT
- 41, 45: SIGNAL PROCESSING UNITS
- 42: BAND-ALLOCATION-INFORMATION MANAGING UNIT
- 43: LPI TRANSMITTING UNIT
- 44: MUX
- 46: UPPER-LAYER PROCESSING UNIT
- 47: BUFFER
- 48: SELECTOR (SEL)
- 49: POWER-SUPPLY CONTROL UNIT

## Claims

1. An optical line terminal that is configured to manage an optical network unit and receive, from the optical network unit, a transmission request for notifying a data amount transmitted by the optical network unit, the optical line terminal comprising:
an upper-layer processing unit (46) that is configured to apply predetermined upper layer processing in a layer higher than the MAC layer to data received from the optical network unit;
**characterized by**
a power-saving-shift determining unit (42) that is configured to determine, based on the transmission request, whether a free period, which is a period in which a band is not allocated to data transmission from optical network units, is equal to or larger than a predetermined band threshold, and instruct, when it is determined that the free period equal to or larger than the predetermined band threshold is present, the upper-layer processing unit (46) to shift to a power saving state, wherein
the upper-layer processing unit (46) is configured to shift to the power saving state or returns from the power saving state based on the instruction of the power-saving-shift determining unit (42).

2. The optical line terminal according to claim 1, wherein the power-saving-shift determining unit (42) is configured to determine, when the upper-layer processing unit (46) is in the power saving state, based on the transmission request, that data is transmitted from the optical network unit and then instruct the upper-layer processing unit (46) to return from the power saving state before outputting the data to the upper-layer processing unit (46).

3. The optical line terminal according to claim 1, further comprising a band-allocation-information managing unit (42) that is configured to carry out, based on the transmission request, band allocation to the optical network unit, wherein
the band-allocation-information managing unit includes the power-saving-shift determining unit (42).

4. The optical line terminal according to claim 2, further comprising a band-allocation-information managing unit (42) that is configured to carry out, based on the transmission request, band allocation to the optical network unit, wherein
the band-allocation-information managing unit includes the power-saving-shift determining unit.

5. The optical line terminal according to claim 3, wherein the band-allocation-information managing unit (42) is configured to release, when being notified from an optical network unit that the optical network unit shifts to a power save mode according to a power save protocol, a band allocated to the optical network unit, which has transmitted the notification, and instruct, when a band is allocated to an optical network unit that is in a state of the power save mode, the optical network unit to return from the power save mode according to the power save protocol

6. The optical line terminal according to claim 1, wherein the optical network is an Ethernet optical network and the optical line terminal further comprises an LPI-signal transmitting unit (43) that is configured to transmit, based on an instruction from the power-saving-shift determining unit (42), an LPI signal for performing a shift to an LPI state specified by IEEE802.3az or return from the LPI state, wherein
the power-saving-shift determining unit (42) further is configured to instruct, when determining that the free period equal to or larger than the predetermined band threshold is present, the LPI-signal transmitting unit (43) to transmit an LPI signal for instructing a shift to the LPI state.

7. The optical line terminal according to claim 2, wherein the optical network is an Ethernet optical network and the optical line terminal further comprises an LPI-signal transmitting unit (43) that is configured to transmit, based on an instruction from the power-saving-shift determining unit (42), an LPI signal for performing a shift to an LPI state specified by IEEE802.3az or return from the LPI state, wherein
the power-saving-shift determining unit (42) further is configured to instruct, when determining that the free period equal to or larger than the predetermined band threshold is present, the LPI-signal transmitting unit (43) to transmit an LPI signal for instructing a shift to the LPI state.

8. The optical line terminal according to claim 3, wherein the optical network is an Ethernet optical network and the optical line terminal further comprises an LPI-signal transmitting unit (43) that is configured to transmit, based on an instruction from the power-saving-shift determining unit (42), an LPI signal for performing a shift to an LPI state specified by IEEE802.3az or return from the LPI state, wherein
the power-saving-shift determining unit (42) further is configured to instruct, when determining that the free period equal to or larger than the predetermined band threshold is present, the LPI-signal transmitting unit (43) to transmit an LPI signal for instructing a shift to the LPI state.

9. The optical line terminal according to claim 4, wherein the optical network is an Ethernet optical network and the optical line terminal further comprises an LPI-signal transmitting unit (43) that is configured to transmit, based on an instruction from the power-saving-shift determining unit (42), an LPI signal for performing a shift to an LPI state specified by IEEE802.3az or return from the LPI state, wherein
the power-saving-shift determining unit (42) further is configured to instruct, when determining that the free period equal to or larger than the predetermined band threshold is present, the LPI-signal transmitting unit (43) to transmit an LPI signal for instructing a shift to the LPI state.

10. The optical line terminal according to any one of claims 1 to 9, further comprising a buffer for accumulating data transmitted from the optical network unit, wherein
the power-saving-shift determining unit (42) is configured to accumulate, when determining, based on the transmission request, that data transmitted from the optical network unit is intermittent, the data transmitted from the optical network unit in the buffer without outputting the data to the upper-layer processing unit (46), instruct, when the upper-layer processing unit is not in the power saving state at the starting time of the accumulation of the data in the buffer, a shift to the power saving state, and, when an elapsed time from the start of accumulation in the buffer exceeds a predetermined dwell time or when an accumulation amount in the buffer exceeds a predetermined threshold, after instructing the returning from the power saving state, read out the data accumulated in the buffer and output the data to the upper-layer processing unit (46).

11. The optical line terminal according to claim 10, wherein the power-saving-shift determining unit (42) is configured to determine, based on the transmission request, when data transmitted from the optical network unit within a predetermined period is equal to or smaller than a predetermined data amount, the data transmitted from the optical network unit is intermittent.

12. The optical line terminal according to claim 10, wherein, when data is accumulated in the buffer, the power-saving-shift determining unit (42) instructs, when determining that data transmitted from the optical network unit exceeds a predetermined upper limit amount, a return from the power saving state before the data arrives, reads out the data accumulated in the buffer and outputs the data to the upper-layer processing unit, and stops accumulation of data in the buffer.

13. The optical line terminal according to any one of claims 1 to 9, further comprising:
a light-signal receiving unit (2) that is configured to convert a light signal received from the optical network unit into an electric signal; and
a burst reception CDR (3) that is configured to reproduce a clock and data based on the electric signal, wherein
the power-saving-shift determining unit (42) is configured to determine, based on the transmission request, whether a free period equal to or larger than a predetermined pre-stage processing stop threshold is present and stop, when determining that the free period equal to or larger than the predetermined pre-stage processing stop threshold is present, power supply or clock supply to the light-signal receiving unit and the burst reception CDR (3).

14. The optical line terminal according to claim 10, further comprising:
a light-signal receiving unit (2) that is configured to convert a light signal received from the optical network unit into an electric signal; and
a burst reception CDR (3) that is configured to reproduce a clock and data based on the electric signal, wherein
the power-saving-shift determining unit (42) is configured to determine, based on the transmission request, whether a free period equal to or larger than a predetermined pre-stage processing stop threshold is present and stop, when determining that the free period equal to or larger than the predetermined pre-stage processing stop threshold is present, power supply or clock supply to the light-signal receiving unit and the burst reception CDR (3).

15. The optical line terminal according to claim 12, further comprising:
a light-signal receiving unit (2) that is configured to convert a light signal received from the optical network unit into an electric signal; and
a burst reception CDR (3) that is configured to reproduce a clock and data based on the electric signal, wherein
the power-saving-shift determining unit (42) is configured to determine, based on the transmission request, whether a free period equal to or larger than a predetermined pre-stage processing stop threshold is present and stop, when determining that the free period equal to or larger than the predetermined pre-stage processing stop threshold is present, power supply or clock supply to the light-signal receiving unit and the burst reception CDR (3).

16. The optical line terminal according to claim 13, wherein the power-saving-shift determining unit (42) is configured to determine, when the power supply or the clock supply to the light-signal receiving unit (2) and the burst reception CDR (3) is stopped, based on the transmission request, that data is transmitted from the optical network unit, and then start the stopped power supply or clock supply to the light-signal receiving unit and the burst reception CDR before outputting the data to the upper-layer processing unit (46).

17. The optical line terminal according to claim 14, wherein the power-saving-shift determining unit (42) is configured to determine, when the power supply or the clock supply to the light-signal receiving unit (2) and the burst reception CDR (3) is stopped, based on the transmission request, that data is transmitted from the optical network unit, and then start the stopped power supply or clock supply to the light-signal receiving unit and the burst reception CDR before outputting the data to the upper-layer processing unit (46).

18. The optical line terminal according to claim 15, wherein the power-saving-shift determining unit (42) is configured to determine, when the power supply or the clock supply to the light-signal receiving unit (2) and the burst reception CDR (3) is stopped, based on the transmission request, that data is transmitted from the optical network unit, and then start the stopped power supply or clock supply to the light-signal receiving unit and the burst reception CDR before outputting the data to the upper-layer processing unit (46).

19. A PON system comprising:
the optical line terminal according to any one of claims 1 to 18; and
an optical network unit that is configured to transmit data to the optical line terminal and transmit a transmission request for notifying a data amount transmitted by the own apparatus.

## Patentansprüche

1. Optisches Leitungsendgerät, das eingerichtet ist, um eine optische Netzwerkeinheit zu verwalten und von der optischen Netzwerkeinheit eine Übertragungsanforderung zum Bekanntgeben einer durch die optische Netzwerkeinheit übertragenen Datenmenge zu empfangen, wobei das optische Leitungsendgerät umfasst:
eine Obere-Schicht-Verarbeitungseinheit (46), die eingerichtet ist, eine vorherbestimmte Obere-Schicht-Verarbeitung in einer Schicht höher als die MAC-Schicht auf Daten anzuwenden, die von der optischen Netzwerkeinheit empfangen werden;
**gekennzeichnet durch**
eine Energiesparwechselbestimmungseinheit (42), die eingerichtet ist zu bestimmen, auf der Grundlage der Übertragungsanforderung, ob ein freier Zeitraum, welcher ein Zeitraum ist, in welchem der Datenübertragung von optischen Netzwerkeinheiten kein Band zugewiesen ist, gleich ist wie oder größer ist als ein vorherbestimmter Bandschwellwert, und, wenn bestimmt wird, dass der freie Zeitraum gleich wie oder größer als der vorherbestimmte Bandschwellwert vorhanden ist, die Obere-Schicht-Verarbeitungseinheit (46) anzuweisen, in einen Energiesparzustand zu wechseln, wobei
die Obere Schicht-Verarbeitungseinheit (46) eingerichtet ist, in den Energiesparzustand zu wechseln oder aus dem Energiesparzustand zurückzukehren auf der Grundlage der Anweisung von der Energiesparwechselbestimmungseinheit (42).

2. Optisches Leitungsendgerät nach Anspruch 1,
wobei die Energiesparwechselbestimmungseinheit (42) eingerichtet ist zu bestimmen, wenn die Obere-Schicht-Verarbeitungseinheit (46) im Energiesparzustand ist, auf der Grundlage der Übertragungsanforderung, dass Daten von der optischen Netzwerkeinheit übertragen werden, und dann die Obere-Schicht-Verarbeitungseinheit (46) anzuweisen, aus dem Energiesparzustand zurückzukehren, vor Ausgeben der Daten an die Obere-Schicht-Verarbeitungseinheit (46).

3. Optisches Leitungsendgerät nach Anspruch 1,
ferner umfassend eine Bandzuweisungsinformationsverwaltungseinheit (42), die eingerichtet ist, auf der Grundlage der Übertragungsanforderung eine Bandzuweisung zu der optischen Netzwerkeinheit durchzuführen, wobei
die Bandzuweisungsinformationsverwaltungseinheit die Energiesparwechselbestimmungseinheit (42) umfasst.

4. Optisches Leitungsendgerät nach Anspruch 2, ferner umfassend eine Bandzuweisungsinformationsverwaltungseinheit (42), die eingerichtet ist, auf der Grundlage der Übertragungsanforderung Bandzuweisung zu der optischen Netzwerkeinheit durchzuführen, wobei
die Bandzuweisungsinformationsverwaltungseinheit die Energiesparwechselbestimmungseinheit umfasst.

5. Optisches Leitungsendgerät nach Anspruch 3, wobei die Bandzuweisungsinformationsverwaltungseinheit (42) eingerichtet ist, bei Benachrichtigung von einer optischen Netzwerkeinheit, dass die optische Netzwerkeinheit gemäß einem Energiesparprotokoll in einen Energiesparmodus wechselt, ein der optischen Netzwerkeinheit, welche die Benachrichtigung übertragen hat, zugewiesenes Band, freizugeben und, wenn ein Band einer optischen Netzwerkeinheit zugewiesen ist, die in einem Zustand des Energiesparmodus ist, die optische Netzwerkeinheit anzuweisen, aus dem Energiesparmodus gemäß dem Energiesparprotokoll zurückzukehren.

6. Optisches Leitungsendgerät nach Anspruch 1,
wobei das optische Netzwerk ein optisches Ethernet-Netzwerk ist und das optische Leitungsendgerät ferner eine LPI-Signalübertragungseinheit (43) umfasst, die eingerichtet ist, auf der Grundlage einer Anweisung von der Energiesparwechselbestimmungseinheit (42), ein LPI-Signal zum Durchführen eines Wechsels in einen LPI-Zustand, spezifiziert durch IEEE802.3az, zu übertragen oder aus dem LPI-Zustand zurückzukehren, wobei
die Energiesparwechselbestimmungseinheit (42) ferner eingerichtet ist, bei Bestimmung, dass der freie Zeitraum gleich wie oder größer als der vorherbestimmte Bandschwellwert vorhanden ist, die LPI-Signalübertragungseinheit (43) anzuweisen, ein LPI-Signal zum Anweisen eines Wechsels in den LPI-Zustand zu übertragen.

7. Optisches Leitungsendgerät nach Anspruch 2, wobei das optische Netzwerk ein optisches Ethernet-Netzwerk ist und das optische Leitungsendgerät ferner eine LPI-Signalübertragungseinheit (43) umfasst, die eingerichtet ist, auf der Grundlage einer Anweisung von der Energiesparwechselbestimmungseinheit (42), ein LPI-Signal zum Durchführen eines Wechsels in einen LPI-Zustand, spezifiziert durch IEEE802.3az, zu übertragen oder aus dem LPI-Zustand zurückzukehren, wobei
die Energiesparwechselbestimmungseinheit (42) ferner eingerichtet ist, bei Bestimmung, dass der freie Zeitraum gleich wie oder größer als der vorherbestimmte Bandschwellwert vorhanden ist, die LPI-Signalübertragungseinheit (43) anzuweisen, ein LPI-Signal zum Anweisen eines Wechsels in den LPI-Zustand zu übertragen.

8. Optisches Leitungsendgerät nach Anspruch 3, wobei das optische Netzwerk ein optisches Ethernet-Netzwerk ist und das optische Leitungsendgerät ferner eine LPI-Signalübertragungseinheit (43) umfasst, die eingerichtet ist, auf der Grundlage einer Anweisung von der Energiesparwechselbestimmungseinheit (42), ein LPI-Signal zum Durchführen eines Wechsels in einen LPI-Zustand, spezifiziert durch IEEE802.3az, zu übertragen oder aus dem LPI-Zustand zurückzukehren, wobei
die Energiesparwechselbestimmungseinheit (42) ferner eingerichtet ist, bei Bestimmung, dass der freie Zeitraum gleich wie oder größer als der vorherbestimmte Bandschwellwert vorhanden ist, die LPI-Signalübertragungseinheit (43) anzuweisen, ein LPI-Signal zum Anweisen eines Wechsels in den LPI-Zustand zu übertragen.

9. Optisches Leitungsendgerät nach Anspruch 4,
wobei das optische Netzwerk ein optisches Ethernet-Netzwerk ist und das optische Leitungsendgerät ferner eine LPI-Signalübertragungseinheit (43) umfasst, die eingerichtet ist, auf der Grundlage einer Anweisung von der Energiesparwechselbestimmungseinheit (42), ein LPI-Signal zum Durchführen eines Wechsels in einen LPI-Zustand, spezifiziert durch IEEE802.3az, zu übertragen oder aus dem LPI-Zustand zurückzukehren, wobei
die Energiesparwechselbestimmungseinheit (42) ferner eingerichtet ist, bei Bestimmung, dass der freie Zeitraum gleich wie oder größer als der vorherbestimmte Bandschwellwert vorhanden ist, die LPI-Signalübertragungseinheit (43) anzuweisen, ein LPI-Signal zum Anweisen eines Wechsels in den LPI-Zustand zu übertragen.

10. Optisches Leitungsendgerät nach einem der Ansprüche 1 bis 9, ferner umfassend einen Puffer zum Ansammeln von Daten, die von der optischen Netzwerkeinheit übertragen werden, wobei
die Energiesparwechselbestimmungseinheit (42) eingerichtet ist, bei Bestimmung, auf der Grundlage der Übertragungsanforderung, dass von der optischen Netzwerkeinheit übertragene Daten intermittierend sind, die von der optischen Netzwerkeinheit übertragenen Daten im Puffer anzusammeln ohne Ausgeben der Daten an die Obere-Schicht-Verarbeitungseinheit (46), wenn die Obere-Schicht-Verarbeitungseinheit zum Startzeitpunkt des Ansammelns der Daten im Puffer nicht im Energiesparzustand ist, einen Wechsel in den Energiesparzustand anzuweisen, und, wenn eine abgelaufene Zeit ab dem Start des Ansammelns im Puffer eine vorherbestimmte Verweilzeit überschreitet oder wenn eine Ansammlungsmenge im Puffer einen vorherbestimmten Schwellwert überschreitet, nach Anweisen des Zurückkehrens aus dem Energiesparzustand, die im Puffer angesammelten Daten auszulesen und die Daten an die Obere-Schicht-Verarbeitungseinheit (46) auszugeben.

11. Optisches Leitungsendgerät nach Anspruch 10, wobei die Energiesparwechselbestimmungseinheit (42) eingerichtet ist zu bestimmen, auf der Grundlage der Übertragungsanforderung, wenn von der optischen Netzwerkeinheit innerhalb eines vorherbestimmten Zeitraums übertragene Daten gleich sind wie oder kleiner sind als eine vorherbestimmte Datenmenge, dass die von der optischen Netzwerkeinheit übertragenen Daten intermittierend sind.

12. Optisches Leitungsendgerät nach Anspruch 10, wobei, wenn Daten im Puffer angesammelt werden, die Energiesparwechselbestimmungseinheit (42) bei Bestimmung, dass von der optischen Netzwerkeinheit übertragene Daten eine vorherbestimmte Obergrenzenmenge überschreiten, ein Zurückkehren aus dem Energiesparzustand, bevor die Daten ankommen, anweist, die im Puffer angesammelten Daten ausliest und die Daten an die Obere-Schicht-Verarbeitungseinheit ausgibt, und Ansammeln von Daten im Puffer beendet.

13. Optisches Leitungsendgerät nach einem der Ansprüche 1 bis 9, ferner umfassend:
eine Lichtsignalempfangseinheit (2), die eingerichtet ist, ein von der optischen Netzwerkeinheit empfangenes Lichtsignal in ein elektrisches Signal umzuwandeln; und
einen Burst-Empfang-CDR (3), der eingerichtet ist, einen Takt und Daten wiederzugeben auf der Grundlage des elektrischen Signals, wobei
die Energiesparwechselbestimmungseinheit (42) eingerichtet ist, zu bestimmen, auf der Grundlage der Übertragungsanforderung, ob ein freier Zeitraum gleich wie oder größer als ein vorherbestimmter Vorstufenverarbeitungsstoppschwellwert vorhanden ist, und bei Bestimmung, dass der freie Zeitraum gleich wie oder größer als der vorherbestimmte Vorstufenverarbeitungsstoppschwellwert vorhanden ist, Energieversorgung oder Taktversorgung an die Lichtsignalempfangseinheit und den Burst-Empfang-CDR (3) zu stoppen.

14. Optisches Leitungsendgerät nach Anspruch 10, ferner umfassend:
eine Lichtsignalempfangseinheit (2), die eingerichtet ist, ein von der optischen Netzwerkeinheit empfangenes Lichtsignal in ein elektrisches Signal umzuwandeln; und
ein Burst-Empfang-CDR (3), der eingerichtet ist, einen Takt und Daten wiederzugeben auf der Grundlage des elektrischen Signals, wobei
die Energiesparwechselbestimmungseinheit (42) eingerichtet ist zu bestimmen, auf der Grundlage der Übertragungsanforderung, ob ein freier Zeitraum gleich wie oder größer als ein vorherbestimmter Vorstufenverarbeitungsstoppschwellwert vorhanden ist, und bei Bestimmung, dass der freie Zeitraum gleich wie oder größer als der vorherbestimmte Vorstufenverarbeitungsstoppschwellwert vorhanden ist, Energieversorgung oder Taktversorgung an die Lichtsignalempfangseinheit und den Burst-Empfang-CDR (3) zu stoppen.

15. Optisches Leitungsendgerät nach Anspruch 12, ferner umfassend:
eine Lichtsignalempfangseinheit (2), die eingerichtet ist, ein von der optischen Netzwerkeinheit empfangenes Lichtsignal in ein elektrisches Signal umzuwandeln; und
ein Burst-Empfangs-CDR (3), der eingerichtet ist, einen Takt und Daten wiederzugeben auf der Grundlage des elektrischen Signals, wobei
die Energiesparwechselbestimmungseinheit(42) eingerichtet ist zu bestimmen, auf der Grundlage der Übertragungsanforderung, ob ein freier Zeitraum gleich wie oder größer als ein vorherbestimmter Vorstufenverarbeitungsstoppschwellwert vorhanden ist, und bei Bestimmung, dass der freie Zeitraum gleich wie oder größer als der vorherbestimmte Vorstufenverarbeitungsstoppschwellwert vorhanden ist, Energieversorgung oder Taktversorgung an die Lichtsignalempfangseinheit und den Burst-Empfang-CDR (3) zu stoppen.

16. Optisches Leitungsendgerät nach Anspruch 13, wobei die Energiesparwechselbestimmungseinheit (42) eingerichtet ist zu bestimmen, wenn die Energieversorgung oder die Taktversorgung an die Lichtsignalempfangseinheit (2) und den Burst-Empfang-CDR (3) gestoppt ist, auf der Grundlage der Übertragungsanforderung, dass Daten von der optischen Netzwerkeinheit übertragen werden, und dann die gestoppte Energieversorgung oder Taktversorgung an die Lichtsignalempfangseinheit und den Burst-Empfang-CDR zu starten, vor Ausgeben der Daten an die Obere-Schicht-Verarbeitungseinheit (46).

17. Optisches Leitungsendgerät nach Anspruch 14, wobei die Energiesparwechselbestimmungseinheit (42) eingerichtet ist, zu bestimmen, wenn die Energieversorgung oder die Taktversorgung an die Lichtsignalempfangseinheit (2) und den Burst-Empfang-CDR (3) gestoppt ist, auf der Grundlage der Übertragungsanforderung, dass Daten von der optischen Netzwerkeinheit übertragen werden, und dann die gestoppte Energieversorgung oder Taktversorgung an die Lichtsignalempfangseinheit und den Burst-Empfang-CDR zu starten, vor Ausgeben der Daten an die Obere-Schicht-Verarbeitungseinheit (46).

18. Optisches Leitungsendgerät nach Anspruch 15, wobei die Energiesparwechselbestimmungseinheit (42) eingerichtet ist zu bestimmen, wenn die Energieversorgung oder die Taktversorgung an die Lichtsignalempfangseinheit (2) und den Burst-Empfang-CDR (3) gestoppt ist, auf der Grundlage der Übertragungsanforderung, dass Daten von der optischen Netzwerkeinheit übertragen werden, und dann die gestoppte Energieversorgung oder Taktversorgung an die Lichtsignalempfangseinheit und den Burst-Empfang-CDR zu starten, vor Ausgeben der Daten an die Obere-Schicht-Verarbeitungseinheit (46).

19. PON-System, umfassend:
das optische Leitungsendgerät nach einem der Ansprüche 1 bis 18; und
eine optische Netzwerkeinheit, die eingerichtet ist, Daten an das optische Leitungsendgerät zu übertragen und eine Übertragungsanforderung zum Benachrichtigen über eine durch das eigene Gerät übertragene Datenmenge zu übertragen.

## Revendications

1. Terminal de ligne optique qui est configuré de façon à gérer une unité de réseau optique, et à recevoir, en provenance de l'unité de réseau optique, une demande de transmission visant à notifier une quantité de données transmises par l'unité de réseau optique, le terminal de ligne optique comprenant :
une unité de traitement de couche supérieure (46), qui est configurée de façon à appliquer un traitement de couche supérieure prédéterminé dans une couche plus élevée que la couche MAC, aux données reçues en provenance de l'unité de réseau optique ;
**caractérisé par** :
une unité de détermination de passage dans un état d'économie d'énergie (42), qui est configurée de façon à déterminer, sur la base de la demande de transmission, si une période libre, qui est une période au cours de laquelle une bande n'est pas attribuée à la transmission de données en provenance des unités de réseau optique, est égale ou supérieure à un seuil de bande prédéterminé, et demande à l'unité de traitement de couche supérieure (46) de passer dans un état d'économie d'énergie, quand on détermine la présence de la période libre égale ou supérieure au seuil de bande prédéterminé, dans lequel :
l'unité de traitement de couche supérieure (46) est configurée de façon à passer à l'état d'économie d'énergie, ou à revenir de l'état d'économie d'énergie, sur la base de l'instruction de l'unité de détermination de passage dans un état d'économie d'énergie (42).

2. Terminal de ligne optique selon la revendication 1,
dans lequel l'unité de détermination de passage dans un état d'économie d'énergie (42) est configurée de façon à déterminer, lorsque l'unité de traitement de couche supérieure (46) se trouve dans l'état d'économie d'énergie, sur la base de la demande de transmission, que des données sont transmises en provenance de l'unité de réseau optique, et ensuite à demander à l'unité de traitement de couche supérieure (46) de revenir de l'état d'économie d'énergie avant de délivrer en sortie les données à l'unité de traitement de couche supérieure (46).

3. Terminal de ligne optique selon la revendication 1,
comprenant en outre une unité de gestion d'informations d'attribution de bande (42), qui est configurée de façon à exécuter, sur la base de la demande de transmission, une attribution de bande à l'unité de réseau optique, dans lequel :
l'unité de gestion d'informations d'attribution de bande comprend l'unité de détermination de passage dans un état d'économie d'énergie (42).

4. Terminal de ligne optique selon la revendication 2,
comprenant en outre une unité de gestion d'informations d'attribution de bande (42), qui est configurée de façon à exécuter, sur la base de la demande de transmission, une attribution de bande à l'unité de réseau optique, dans lequel :
l'unité de gestion d'informations d'attribution de bande comprend l'unité de détermination de passage dans un état d'économie d'énergie.

5. Terminal de ligne optique selon la revendication 3,
dans lequel l'unité de gestion d'informations d'attribution de bande (42) est configurée de façon à libérer, lors d'une notification en provenance d'une unité de réseau optique que l'unité de réseau optique passe dans un mode d'économie d'énergie selon un protocole d'économie d'énergie, une bande attribuée à l'unité de réseau optique, qui a transmis la notification, et à demander, quand une bande est attribuée à une unité de réseau optique qui se trouve dans un état du mode d'économie d'énergie, à l'unité de réseau optique de revenir du mode d'économie d'énergie selon le protocole d'économie d'énergie.

6. Terminal de ligne optique selon la revendication 1,
dans lequel le réseau optique est un réseau optique Ethernet, et le terminal de ligne optique comprend en outre une unité de transmission de signal LPI (43), qui est configurée de façon à transmettre, sur la base d'une instruction en provenance de l'unité de détermination de passage dans un état d'économie d'énergie (42), un signal LPI visant à exécuter un passage dans un état LPI spécifié par la norme IEEE 802.3az, ou à revenir de l'état LPI, dans lequel :
l'unité de détermination de passage dans un état d'économie d'énergie (42) est configurée en outre de façon à demander, quand on détermine la présence de la période libre égale ou supérieure au seuil de bande prédéterminé, à l'unité de transmission de signal LPI (43), de transmettre un signal LPI visant à demander un passage dans l'état LPI.

7. Terminal de ligne optique selon la revendication 2,
dans lequel le réseau optique est un réseau optique Ethernet, et le terminal de ligne optique comprend en outre une unité de transmission de signal LPI (43), qui est configurée de façon à transmettre, sur la base d'une instruction en provenance de l'unité de détermination de passage dans un état d'économie d'énergie (42), un signal LPI visant à exécuter un passage dans un état LPI spécifié par la norme IEEE 802.3az, ou à revenir de l'état LPI, dans lequel :
l'unité de détermination de passage dans un état d'économie d'énergie (42) est configurée en outre de façon à demander, quand on détermine la présence de la période libre égale ou supérieure au seuil de bande prédéterminé, à l'unité de transmission de signal LPI (43), de transmettre un signal LPI visant à demander un passage dans l'état LPI.

8. Terminal de ligne optique selon la revendication 3,
dans lequel le réseau optique est un réseau optique Ethernet, et le terminal de ligne optique comprend en outre une unité de transmission de signal LPI (43), qui est configurée de façon à transmettre, sur la base d'une instruction en provenance de l'unité de détermination de passage dans un état d'économie d'énergie (42), un signal LPI visant à exécuter un passage dans un état LPI spécifié par la norme IEEE 802.3az, ou à revenir de l'état LPI, dans lequel :
l'unité de détermination de passage dans un état d'économie d'énergie (42) est configurée en outre de façon à demander, quand on détermine la présence de la période libre égale ou supérieure au seuil de bande prédéterminé, à l'unité de transmission de signal LPI (43), de transmettre un signal LPI visant à demander un passage dans l'état LPI.

9. Terminal de ligne optique selon la revendication 4,
dans lequel le réseau optique est un réseau optique Ethernet, et le terminal de ligne optique comprend en outre une unité de transmission de signal LPI (43), qui est configurée de façon à transmettre, sur la base d'une instruction en provenance de l'unité de détermination de passage dans un état d'économie d'énergie (42), un signal LPI visant à exécuter un passage dans un état LPI spécifié par la norme IEEE 802.3az, ou à revenir de l'état LPI, dans lequel :
l'unité de détermination de passage dans un état d'économie d'énergie (42) est configurée en outre de façon à demander, quand on détermine la présence de la période libre égale ou supérieure au seuil de bande prédéterminé, à l'unité de transmission de signal LPI (43), de transmettre un signal LPI visant à demander un passage dans l'état LPI.

10. Terminal de ligne optique selon l'une quelconque des revendications 1 à 9,
comprenant en outre un tampon destiné à accumuler les données transmises en provenance de l'unité de réseau optique, dans lequel :
l'unité de détermination de passage dans un état d'économie d'énergie (42) est configurée de façon à accumuler, quand on détermine, sur la base de la demande de transmission, que les données transmises en provenance de l'unité de réseau optique sont intermittentes, les données transmises en provenance de l'unité de réseau optique dans le tampon sans délivrer en sortie les données à l'unité de traitement de couche supérieure (46), à demander, lorsque l'unité de traitement de couche supérieure ne se trouve pas dans l'état d'économie d'énergie au début de l'accumulation des données dans le tampon, un décalage à l'état d'économie d'énergie, et, quand un temps écoulé depuis le début de l'accumulation dans le tampon, dépasse un temps de pause prédéterminé, ou quand une quantité d'accumulation dans le tampon dépasse un seuil prédéterminé, après avoir demandé le retour à partir de l'état d'économie d'énergie, à lire les données accumulées dans le tampon, et à délivrer en sortie les données vers l'unité de traitement de couche supérieure (46).

11. Terminal de ligne optique selon la revendication 10,
dans lequel l'unité de détermination de passage dans un état d'économie d'énergie (42) est configurée de façon à déterminer, sur la base de la demande de transmission, lorsque les données transmises en provenance de l'unité de réseau optique au cours d'une période prédéterminée, sont égales ou inférieures à une quantité de données prédéterminées, que les données transmises en provenance de l'unité de réseau optique sont intermittentes.

12. Terminal de ligne optique selon la revendication 10,
dans lequel, lorsque des données sont accumulées dans le tampon, l'unité de détermination de passage dans un état d'économie d'énergie (42) demande, quand on détermine que les données transmises en provenance de l'unité de réseau optique dépassent une quantité de limite supérieure prédéterminée, un retour depuis l'état d'économie d'énergie avant que les données arrivent, lit les données accumulées dans le tampon, et délivre en sortie les données à l'unité de traitement de couche supérieure, et met fin à l'accumulation des données dans le tampon.

13. Terminal de ligne optique selon l'une quelconque des revendications 1 à 9, comprenant en outre :
une unité de réception d'un signal optique (2) qui est configurée de façon à convertir un signal optique reçu en provenance de l'unité de réseau optique, en un signal électrique ; et
un CDR (dispositif de récupération des données d'horloge) de réception de salve (3), qui est configuré de façon à reproduire une horloge et des données sur la base du signal électrique, dans lequel :
l'unité de détermination de passage dans un état d'économie d'énergie (42) est configurée de façon à déterminer, sur la base de la demande de transmission, si une période libre égale ou supérieure à un seuil d'arrêt de traitement de stade préalable prédéterminé, est présente, et à arrêter, quand on détermine la présence de la période libre égale ou supérieure au seuil d'arrêt de traitement de stade préalable prédéterminé, l'alimentation ou la fourniture de l'horloge à l'unité de réception d'un signal optique et au CDR de réception de salve (3).

14. Terminal de ligne optique selon la revendication 10,
comprenant en outre :
une unité de réception d'un signal optique (2) qui est configurée de façon à convertir un signal optique reçu en provenance de l'unité de réseau optique, en un signal électrique ; et
un CDR de réception de salve (3), qui est configuré de façon à reproduire une horloge et des données sur la base du signal électrique, dans lequel :
l'unité de détermination de passage dans un état d'économie d'énergie (42) est configurée de façon à déterminer, sur la base de la demande de transmission, si une période libre égale ou supérieure à un seuil d'arrêt de traitement de stade préalable prédéterminé, est présente, et à arrêter, quand on détermine la présence de la période libre égale ou supérieure au seuil d'arrêt de traitement de stade préalable prédéterminé, l'alimentation ou la fourniture de l'horloge à l'unité de réception d'un signal optique et au CDR de réception de salve (3).

15. Terminal de ligne optique selon la revendication 12,
comprenant en outre :
une unité de réception d'un signal optique (2) qui est configurée de façon à convertir un signal optique reçu en provenance de l'unité de réseau optique, en un signal électrique ; et
un CDR de réception de salve (3), qui est configuré de façon à reproduire une horloge et des données sur la base du signal électrique, dans lequel :
l'unité de détermination de passage dans un état d'économie d'énergie (42) est configurée de façon à déterminer, sur la base de la demande de transmission, si une période libre égale ou supérieure à un seuil d'arrêt de traitement de stade préalable prédéterminé, est présente, et à arrêter, quand on détermine la présence de la période libre égale ou supérieure au seuil d'arrêt de traitement de stade préalable prédéterminé, l'alimentation ou la fourniture de l'horloge à l'unité de réception d'un signal optique et au CDR de réception de salve (3).

16. Terminal de ligne optique selon la revendication 13,
dans lequel l'unité de détermination de passage dans un état d'économie d'énergie (42) est configurée de façon à déterminer, lorsque l'alimentation ou la fourniture de l'horloge à l'unité de réception d'un signal optique (2) et au CDR de réception de salve (3) est arrêtée, sur la base de la demande de transmission, que des données sont transmises en provenance de l'unité de réseau optique, et ensuite à mettre en service l'alimentation ou la fourniture de l'horloge arrêtée de l'unité de réception d'un signal optique et du CDR de réception de salve, avant de délivrer en sortie les données à l'unité de traitement de couche supérieure (46).

17. Terminal de ligne optique selon la revendication 14,
dans lequel l'unité de détermination de passage dans un état d'économie d'énergie (42) est configurée de façon à déterminer, lorsque l'alimentation ou la fourniture de l'horloge à l'unité de réception d'un signal optique (2) et au CDR de réception de salve (3) est arrêtée, sur la base de la demande de transmission, que des données sont transmises en provenance de l'unité de réseau optique, et ensuite à mettre en service l'alimentation ou la fourniture de l'horloge arrêtée de l'unité de réception d'un signal optique et du CDR de réception de salve, avant de délivrer en sortie les données à l'unité de traitement de couche supérieure (46).

18. Terminal de ligne optique selon la revendication 15,
dans lequel l'unité de détermination de passage dans un état d'économie d'énergie (42) est configurée de façon à déterminer, lorsque l'alimentation ou la fourniture de l'horloge à l'unité de réception d'un signal optique (2) et au CDR de réception de salve (3) est arrêtée, sur la base de la demande de transmission, que des données sont transmises en provenance de l'unité de réseau optique, et ensuite à mettre en service l'alimentation ou la fourniture de l'horloge arrêtée de l'unité de réception d'un signal optique et du CDR de réception de salve, avant de délivrer en sortie les données à l'unité de traitement de couche supérieure (46).

19. Système de PON (réseau optique passif) comprenant :
le terminal de ligne optique selon l'une quelconque des revendications 1 à 18 ; et
une unité de réseau optique qui est configurée de façon à transmettre des données au terminal de ligne optique, et à transmettre une demande de transmission visant à notifier une quantité de données transmises par le propre appareil.
